# EUROPÄISCHE PATENTSCHRIFT

(11) **EP 2 897 821 B1**
(45) Veröffentlichungstag und Bekanntmachung des Hinweises auf die Patenterteilung: **30.11.2016**
(21) Anmeldenummer: 13765742.5
(22) Anmeldetag: 20.09.2013
(51) Int. Cl.: B60G 17/048, B60G 17/052, B60G 11/27

(54) **LUFTFEDERANORDNUNG MIT INTEGRIERTEM STEUERVENTIL**
AIR SPRING ARRANGEMENT WITH INTEGRATED CONTROL VALVE
SYSTÈME DE RESSORT PNEUMATIQUE À SOUPAPE DE COMMANDE INTÉGRÉE

(30) Priorität: 21.09.2012 DE 102012108941
(43) Veröffentlichungstag der Anmeldung: 29.07.2015
(73) Patentinhaber: KNORR-BREMSE Systeme für Nutzfahrzeuge GmbH, 80809 München (DE)
(72) Erfinder: KANTOR, Kornel, H-6000 Kecskemét (HU); TANCZOS, Miklos, H-6000 Kecskemet (HU)
(86) Internationale Anmeldenummer: PCT/EP2013/069620
(87) Internationale Veröffentlichungsnummer: WO 2014/044820

(56) Entgegenhaltungen:
- DE-A1-102010 012 346
- DE-B3-102009 046 290
- JP-A- H1 178 877
- US-A- 2 844 385
- US-A1- 2003 137 086
- US-B1- 6 332 624

## Beschreibung

### GEBIET DER ERFINDUNG

Die vorliegende Erfindung betrifft eine Luftfederanordnung mit mindestens einem integrierten Steuerventil zur Beaufschlagung einer zwischen einem Außenrohr, einem Abrollrohr und einem diese verbindenden von einem Luftfederbalg gebildeten Druckkammer mit Druckluft, wobei das Steuerventil mit mehreren Schaltpositionen über integrierte mechanische Betätigungsmittel in Abhängigkeit eines Luftfederhubs zur Niveaueinstellung ansteuerbar ist, wobei ferner die Druckkammer eine stirnseitig zwischen einem Rohroberteil und einem Rohrunterteil des Außenrohrs anliegende Druckfeder umfasst.

Das Einsatzgebiet der Erfindung erstreckt sich vornehmlich auf die Fahrzeugtechnik. Im Bereich des Fahrwerks von Nutzfahrzeugen kommen beispielsweise Schwingungsdämpfer zum Einsatz, die ein meist hydraulisches Dämpfungselement und eine hiermit zusammenwirkende Luftfederanordnung umfassen. Im Sinne einer integrierten Bauweise weist das Dämpfungselement üblicherweise ein Behälterrohr auf, welches mit einem Abrollrohr der Luftfeder verbunden ist, wobei das Abrollrohr über einen als Rollbalg wirkenden Luftfederbalg mit einem konzentrisch und relativ zum Abrollrohr axial beweglich angeordneten Außenrohr verbunden ist. Der Luftfederbalg, das Abrollrohr sowie das Außenrohr begrenzen eine unter Luftdruck zur Federung stehende Druckkammer.

Mit derartigen Schwingungsdämpfern ist beispielsweise die Aufhängung eines Fahrerhauses auf einem Fahrwerk eines Nutzfahrzeuges ausgestattet, um die von der Straße über die Radaufhängung in das Fahrwerk eingeleiteten Schwingungen vom Fahrerhaus weitgehend fern zu halten.

### HINTERGRUND DER ERFINDUNG

Aus der DE 44 09 252 geht eine Luftfederanordnung für ein Nutzfahrzeug hervor, bei der innenliegend ein Steuerventil zum Zu- und Abführen von Druckluft angeordnet ist, welches über ebenfalls innerhalb angeordnete mechanische Betätigungsmittel je nach Höhenniveau ansteuerbar ist. Gewöhnlich wird der Druckkammer der Luftfederanordnung Druckluft zugeführt, wenn die Luftfeder auf Mindesthöhenniveau abfällt, um die Federungseigenschaften wieder herzustellen. Eine Entlüftung der Druckkammer erfolgt dagegen, wenn das Höhenniveau der Luftfederanordnung reduziert werden soll.

Zu diesem Zweck besteht das Steuerventil bei diesem Stand der Technik aus zwei Einzelventilen, von denen eines am Außenrohr und eines am relativ zum Außenrohr beweglichen Abrollrohr angeordnet ist. Die Betätigungsmittel bestehen aus einer halbstarren Regelstange, über welche die beiden Einzelventile derart wechselseitig betätigt werden, dass das eine Einzelventil geschlossen ist, wenn das andere Einzelventil öffnet. Allerdings erscheinen die Betätigungsmittel wegen der recht großen Längserstreckung sowie der recht vielen einzelnen Bauteile recht aufwendig.

Aus der DE 102 00 553 C1 geht eine andere Luftfederanordnung hervor, bei welcher auf ein einziges Steuerventil zurückgegriffen wird, das neben einem Be- und Entlüften der innenliegenden Druckkammer auch eine mittlere Abschlussstellung realisiert. Das Steuerventil wird über ebenfalls integrierte Betätigungsmittel angesteuert, welche an einem der beiden relativ zueinander beweglichen Luftfederbaugruppen Außenrohr und Abrollrohr angreifen. Die Betätigungsmittel weisen hier eine Baulänge auf, die kürzer ist als die Hublänge der Luftfederanordnung. Ein Steuerelement ist von einer Feder gegen eine der zueinander beweglichen Luftfederbaugruppen vorgespannt, wobei das Steuerelement relativ zu den Luftfederbaugruppen schwimmend gelagert ist. Eine zweite Feder, deren Kraftrichtung gegen die erste Feder wirksam ist, bestimmt insoweit die Stellung des Steuerelementes mit.

Darüber hinaus geht aus der DE 10 2010 012 346 A1, die als nächstliegender Stand de Technik betrachtet wird, eine Luftfederanordnung mit mindestens einem integrierten Steuerventil zur Beaufschlagung einer zwischen einem Außenrohr, einem Abrollrohr und einem diese verbindenden Luftfederbalg gebildeten Druckkammer mit Druckluft hervor. Das Steuerventil ist mit mehreren Schaltpositionen über ebenfalls integrierte mechanische Betätigungsmittel in Abhängigkeit des Luftfederhubs zur Niveaueinstellung ansteuerbar. Die mechanischen Betätigungsmittel umfassen eine seitens des Außenrohrs oder Abrollrohrs stirnseitig befestigte Druckfeder, deren Ende mit einem Betätigungsstößel eines gegenüberliegend am Abrollrohr bzw. Außenrohr angeordneten Steuerventils zusammenwirkt.

Ferner geht aus der DE 196 49 316 A1 eine Niveauregelung für Fahrzeuge mit einer Schleusenkammer, mit einem Schleuseneingang und einem Schleusenausgang zum Zuspeisen und Ablassen von Fluid hervor. Ferner weist die Niveauregelung Federelemente auf, bei denen ein Federkolben aus einem Arbeitszylinder austritt und Fluid gegen den Druck eines Federgaspolsters verdrängt. Eine Regelöffnung, die ein Sollniveau, einen Einfederbereich und einen Ausfederbereich festlegt und im Einfederbereich gesperrt ist ebenfalls Teil der Niveauregelung. Über eine Versorgungsleitung wird in einer Speise-Phase Fluid in die Schleusenkammer gespeist und in einer Ablass-Phase Fluid aus der Schleusenkammer abgelassen. Das Erreichen des Sollniveaus wird über einen Sensor registriert und beeinflusst. Als Sensoren können insbesondere Drucksensoren, aber auch Lichtschleusen oder ein am Federkolben befestigtes Steuerrohr verwendet werden. Ferner kann das Steuerrohr auch am Arbeitszylinder befestigt sein.

### OFFENBARUNG DER ERFINDUNG

Es ist daher die Aufgabe der vorliegenden Erfindung eine Luftfederanordnung zu schaffen, deren Steuerventil sich mit robusten und kompaktbauenden mechanischen Betätigungsmittel präzise aktivieren lässt und eine Stufencharakteristik der Be- und Entlüftung einer Druckkammer realisiert.

Die Aufgabe wird ausgehend von einer Luftfederanordnung gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß ist ein mit dem mindestens einen integrierten Steuerventil mechanisch verbundener Hebel über mindestens eine an einer Stirnfläche des Rohrunterteils angeordnete Betätigungsnase betätigbar, um eine Stufencharakteristik einer Be- und Entlüftung der Druckkammer zu realisieren. Die mindestens eine Betätigungsnase ist vorzugsweise mittig an der Stirnfläche des Rohrunterteils angeordnet. Der Hebel ist an einem Ventilgehäuse des mindestens einen integrierten Steuerventils gelagert. Sowohl der Hebel als auch die mindestens eine Betätigungsnase sind aus einem metallischen Werkstoff hergestellt.

Besonders bevorzugt ist, dass das mindestens eine integrierte Steuerventil als ein 3/3-Wegeventil ausgebildet ist und die Druckkammer belüftet, entlüftet und absperrt. Durch das 3/3-Wegeventil können die drei Schaltfunktionen nicht nur kompaktbauend ausgeführt werden, sondern auch präzise reguliert werden.

Die Erfindung schließt die technische Lehre ein, dass die mindestens eine Betätigungsnase teilweise in das Abrollrohr eindringt, um den Hebel zu betätigen. Eine Betätigung des Hebels führt zu einer Betätigung des mindestens einen integrierten Steuerventils und den damit verbundenen Funktionen einer Belüftung, Entlüftung und Absperrung der Druckkammer.

Gemäß einem bevorzugten Ausführungsbeispiel ist die mindestens eine Betätigungsnase über eine kraftschlüssige oder stoffschlüssige Verbindung mit der Stirnfläche des Rohrunterteils verbunden. Besonders vorteilhaft ist eine Schraubverbindung oder eine schweißtechnische Verbindung. Die Schraubverbindung hat den Vorteil eines einfachen Wechsels der mindestens einen Betätigungsnase.

Gemäß einem weiteren bevorzugten Ausführungsbeispiel sind das Rohrunterteil und die daran angeordnete mindestens eine Betätigungsnase einstückig ausgebildet. Die mindestens eine Betätigungsnase kann somit direkt beim Urformen oder Umformen des Rohrunterteils erzeugt werden.

Vorzugsweise weist der Hebel eine Hufeisenform auf und ist mit beiden distalen Enden an dem Ventilgehäuse des mindestens einen integrierten Steuerventils gelagert. Die Hufeisenform weist eine doppelte Lagerung am Ventilgehäuse auf, die von einer hohen Stabilität und Festigkeit geprägt ist.

Nach einem Weiteren Ausführungsbeispiel weist der Hebel eine Stangenform auf und ist mit einem distalen Ende an dem Ventilgehäuse des mindestens einen integrierten Steuerventils gelagert. Diese Ausbildung des Hebels weist aufgrund der Materialeinsparung eine Gewichtsoptimierung auf, wobei die Senkung der dynamischen Masse weitere Vorteile mit sich zieht. Beispiele dafür können kleinere Federelemente und ein präziseres Ansprechverhalten des mindestens einen integrierten Steuerventils sein.

Es wird weiterhin vorgeschlagen, dass die mindestens eine Betätigungsnase zwischen einer vollen Ausfederungsposition und einer partiellen Ausfederungsposition von mindestens +15mm keinen Kontakt zum Hebel aufweist und das mindestens eine integrierte Steuerventil die Druckkammer entlüftet, wobei mit zunehmender Einfederung ein Entlüftungsquerschnitt abnimmt.

Die Erfindung schließt die technische Lehre ein, dass das mindestens eine integrierte Steuerventil in einem Einfederungsbereich zwischen +3mm und -3mm absperrt.

Des Weiteren bevorzugt ist, dass eine Belüftung der Druckkammer durch das mindestens eine integrierte Steuerventil eine Einfederung von weniger als -3mm erfordert, wobei mit zunehmender Einfederung ein Belüftungsquerschnitt zunimmt.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig.1: einen teilweise Längsschnitt durch eine erfindungsgemäße Luftfederanordnung mit einer Betätigungsnase und einem dieser zugeordneten an einem Steuerventil gelagerten hufeisenförmigen Hebel,
- Fig.2: eine vergrößerte perspektivische Darstellung des Steuerventils mit daran gelagertem hufeisenförmigen Hebel aus Fig. 1, und
- Fig.3: eine perspektivische Darstellung einer weiteren Ausführungsform des Steuerventils mit daran gelagertem stangenförmigen Hebel und das dazugehörige Schnittbild des Steuerventils.

### DETAILLIERTE BESCHREIBUNG EINER BEVORZUGTEN AUSFÜHRUNGSFORM

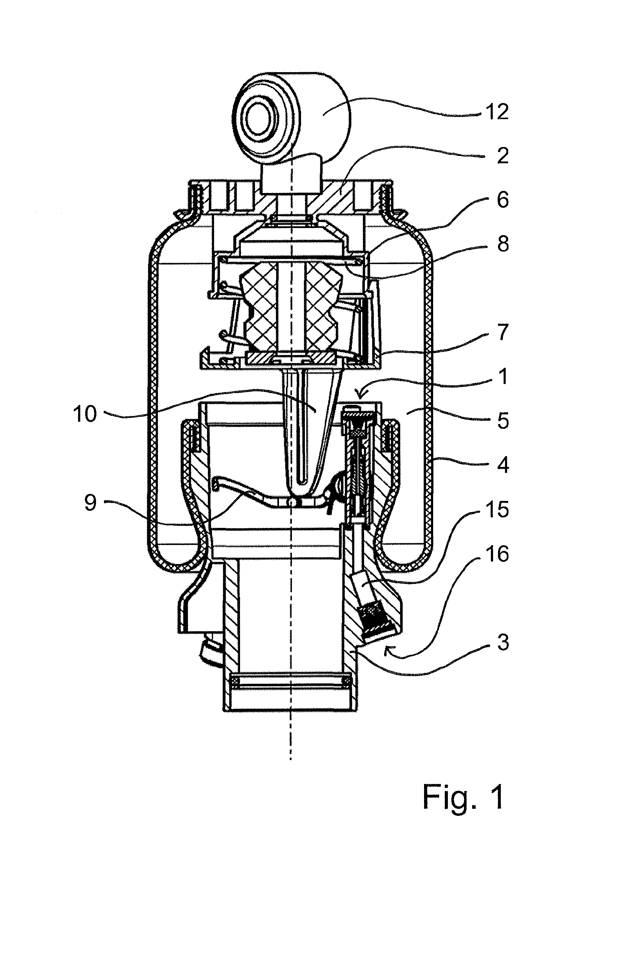

Die Luftfederanordnung nach Figur 1 besteht im Wesentlichen aus einem Außenrohr 2 mit einer oberen Befestigungsöse 12, welchem ein Abrollrohr 3 mit einer zugeordneten - hier nicht dargestellten - unterer Befestigungsöse gegenüberliegt. Die untere Befestigungsöse ist Bestandteil eines - hier nicht dargestellten - hydraulischen Stoßdämpfers, welcher koaxial von dem Außenrohr 2 und dem Abrollrohr 3 umgeben ist. Zwischen dem Außenrohr 2 und dem Abrollrohr 3 verläuft ein Luftfederbalg 4 aus einem Elastomermaterial, der sich an der Außenoberfläche des Abrollrohres 3 je nach Luftfederhub abrollt. Von dem Außenrohr 2, dem Abrollrohr 3 sowie dem Luftfederbalg 4 wird eine Druckkammer 5 gebildet, die mit Druckluft beaufschlagt die Luftfederfunktion der Luftfederanordnung erfüllt. Zur Druckbeaufschlagung der Druckkammer 5 ist ein an einer Innenumfangsfläche des Abrollrohres 3 angeordnetes Steuerventil 1 vorgesehen, welches als 3/3-Wegeventil ausgebildet ist und über die Schaltpositionen belüften, entlüften und absperren verfügt.

Ferner bildet ein koaxial am Außenrohr 2 angeformtes Rohroberteil 6 gemeinsam mit einem Rohrunterteil 7 und einer dazwischen angeordneten und vorgespannten Druckfeder 8 eine Teleskopanordnung. Das Steuerventil 1 wird in Abhängigkeit des Luftfederhubs von einem dem Steuerventil 1 zugeordneten an einem Ventilgehäuse 11 des Steuerventils 1 gelagerten Hebel 9, sowie einem dem Hebel 9 zugeordneten an einer Stirnfläche des Rohrunterteils 7 angeordneten Betätigungsnase 10 betätigt. Die durch die Druckfeder 8 bewirkte Vorspannung ist so stark bemessen, dass eine Betätigung des Hebels 9 durch eine Berührung der Betätigungsnase 10 erfolgt.
Die Länge der Betätigungsnase 10 und ihre Position relativ zum Hebel 9 ist so bemessen, dass fünf Phasen der Ventilbetätigung verwirklicht werden. Zwischen einer vollen Ausfederung von ca. +40mm -bezogen auf die Nennlänge der Luftfeder- und einer partieller Ausfederung von ca. +15mm wird der Hebel 9 von der Betätigungsnase 10 nicht berührt, sodass der Hebel 9 in einer oberen Position verbleibt und das Steuerventil 1 die Druckkammer 5 mit einem Entlüftungskanal 13 verbindet. In Phase 1 ist somit ein Entlüftungsquerschnitt voll geöffnet und weist einen maximalen Querschnitt auf. Sobald die Einfederung einen Wert von +15mm unterschreitet und die Betätigungsnase 10 den Hebel 9 betätigt wird Phase 2 eingeleitet. Der Entlüftungsquerschnitt verringert sich stufenlos, wobei das Steuerventil 1 aus einer Entlüftung der Druckkammer 5 in eine Absperrung der Druckkammer 5 übergeht.

In einem Einfederungsbereich zwischen +3mm und -3mm befindet sich das Steuerventil 1 in Phase 3 und ist geschlossen. Sofern die Einfederung einen Wert von ca. - 3mm unterschreitet beginnt Phase 4, wobei der Hebel 9 die Betätigungsnase 10 weiter herunterdrückt, öffnet das Steuerventil 1 und verbindet einen Belüftungskanal 14 mit der Druckkammer 5. Mit zunehmender Einfederung vergrößert sich dabei der Belüftungsquerschnitt, wobei eine maximale Einfederung von ca. -15mm das Steuerventil 1 voll öffnet und darüber hinaus dazu führt, dass die Rohrunterteil 7 auf das Abrollrohr 3 aufschlägt. Die Betätigungsnase 10 kann nicht weiter eingedrückt werden und der Belüftungsquerschnitt ist maximal geöffnet (Phase 5).

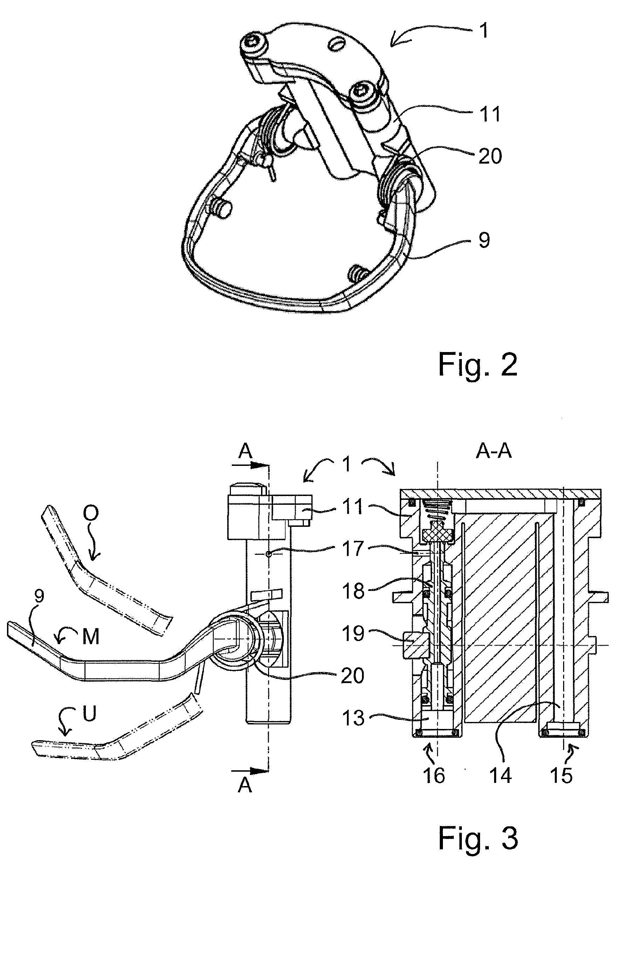

Gemäß Figur 2 ist der Hebel 9 am Ventilgehäuse 11 des Steuerventils 1 doppelt gelagert. Diese Konstruktionsweise ist festigkeitstechnisch besonders vorteilhaft und weist eine hohe Stabilität auf. Ferner stellen der Hebel 9 und das Steuerventil 1 eine vormontierte Einheit dar.

Figur 3 zeigt eine weitere Ausführungsform des an das Ventilgehäuse 11 des Steuerventils 1 gelagerten Hebels 9. Der Hebel 9 ist stangenförmig ausgebildet und weist eine leicht gewölbte Form auf. Ferner ist der Hebel 9 nur einseitig am Ventilgehäuse 11 des Steuerventils 1 gelagert und mit einer Torsionsfeder 20 derart vorgespannt, dass sich der Hebel 9 in einem von der Betätigungsnase 10 unbelasteten Zustand in einer oberen Position O befindet. In dieser Position weist das Steuerventil 1 einen maximalen Entlüftungsquerschnitt auf. Demgegenüber weist das Steuerventil 1 in einer unteren Position U des Hebels 9 einen maximalen Belüftungsquerschnitt auf.

Die hier gezeigte mittlere Position M des Hebels 9 sperrt die Be- und Entlüftung der Druckkammer 5.

Die nebenstehende Figur stellt einen Schnitt entlang einer Schnittlinie A dar. Aus der Schnittdarstellung des Steuerventils 1 ist ersichtlich, dass das Ventilgehäuse 11 einen Belüftungsanschluss 15 und einen Entlüftungsanschluss 16 aufweist, die mit -hier nicht dargestellten- Be- und Entlüftungskanälen im Abrollrohr 3 und dadurch mit Be- und Entlüftungsanschlüsse der Luftfedereinheit verbunden sind. Darüber hinaus ist eine Verbindungsbohrung 17 im Ventilgehäuse 11 zur fluidtechnischen Verbindung des Steuerventils 1 mit der Druckkammer 5 ausgebildet. Ferner sind im Ventilgehäuse 11 ein Belüftungskanal 14 und ein Entlüftungskanal 13 ausgebildet. Das Steuerventil 1 ist als ein 3/3-Wegeventil ausgebildet und der Ventilstößel 18 ist im Entlüftungskanal 13 integriert. Ferner ist der Ventilstößel 18 mit dem Hebel 9 über einen Hebelzapfen 19 mechanisch verbunden und axial im Entlüftungskanal 13 auf und ab bewegbar.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, anstelle einer Torsionsfeder 20 eine Zug- oder Druckfeder derart vorzuspannen, dass sich der Hebel 9 in dem von der Betätigungsnase 10 unbelasteten Zustand in der oberen Position O befindet. Ferner sind auch andere Ausführungsformen des Hebels möglich, wie beispielsweise kreis- oder ellipsenförmige Ausführungsformen.

### Bezugszeichenliste

- 1: Steuerventil
- 2: Außenrohr
- 3: Abrollrohr
- 4: Luftfederbalg
- 5: Druckkammer
- 6: Rohroberteil
- 7: Rohrunterteil
- 8: Druckfeder
- 9: Hebel
- 10: Betätigungsnase
- 11: Ventilgehäuse
- 12: obere Befestigungsöse
- 13: Entlüftungskanal
- 14: Belüftungskanal
- 15: Belüftungsanschluss
- 16: Entlüftungsanschluss
- 17: Verbindungsbohrung
- 18: Ventilstößel
- 19: Hebelzapfen
- 20: Torsionsfeder

- M: mittlere Position
- O: obere Position
- U: untere Position

## Patentansprüche

1. Luftfederanordnung mit mindestens einem integrierten Steuerventil (1) zur Beaufschlagung einer zwischen einem Außenrohr (2), einem Abrollrohr (3) und einem diese verbindenden von einem Luftfederbalg (4) gebildeten Druckkammer (5) mit Druckluft, wobei das mindestens eine integrierte Steuerventil (1) mit mehreren Schaltpositionen über integrierte mechanische Betätigungsmittel in Abhängigkeit eines Luftfederhubs zur Niveaueinstellung ansteuerbar ist, wobei ferner die Druckkammer (5) eine stirnseitig zwischen einem Rohroberteil (6) des Außenrohrs (2) und einem Rohrunterteil (7) des Außenrohrs (2) anliegende Druckfeder (8) umfasst, **dadurch gekennzeichnet, dass** ein mit dem mindestens einen integrierten Steuerventil (1) mechanisch verbundener Hebel (9) über mindestens eine an einer Stirnfläche des Rohrunterteils (7) angeordnete Betätigungsnase (10) betätigbar ist, um eine Stufencharakteristik einer Be- und/oder Entlüftung der Druckkammer (5) zu realisieren. , wobei die mindestens eine Betätigungsnase (10) zur Betätigung des Hebels (9) teilweise in das Abrollrohr (3) eindringt.

2. Luftfederanordnung nach Anspruch 1,
**dadurch gekennzeichnet, dass** die mindestens eine Betätigungsnase (10) über eine kraftschlüssige oder stoffschlüssige Verbindung mit der Stirnfläche des Rohrunterteils (7) verbunden ist.

3. Luftfederanordnung nach Anspruch 1,
**dadurch gekennzeichnet, dass** das Rohrunterteil (7) und die daran angeordnete mindestens eine Betätigungsnase (10) einstückig ausgebildet sind.

4. Luftfederanordnung nach Anspruch 1,
**dadurch gekennzeichnet, dass** der Hebel (9) eine Hufeisenform aufweist und mit beiden distalen Enden an einem Ventilgehäuse (11) des mindestens einen integrierten Steuerventils (1) gelagert ist.

5. Luftfederanordnung nach Anspruch 1,
**dadurch gekennzeichnet, dass** der Hebel (9) eine Stangenform aufweist und mit einem distalen Ende an dem Ventilgehäuse (11) des mindestens einen integrierten Steuerventils (1) gelagert ist.

6. Luftfederanordnung nach Anspruch 1,
**dadurch gekennzeichnet, dass** das mindestens eine integrierte Steuerventil (1) als ein 3/3-Wegeventil ausgebildet ist und die Druckkammer (5) belüftet, entlüftet und absperrt.

7. Luftfederanordnung nach Anspruch 1 oder 6,
**dadurch gekennzeichnet, dass** die mindestens eine Betätigungsnase (10) zwischen einer vollen Ausfederungsposition und einer partiellen Ausfederungsposition von mindestens etwa +15mm keinen Kontakt zum Hebel (9) aufweist und das mindestens eine integrierte Steuerventil (1) die Druckkammer (5) entlüftet, wobei mit zunehmender Einfederung von etwa +15mm bis etwa +3mm ein Entlüftungsquerschnitt abnimmt.

8. Luftfederanordnung nach Anspruch 1 oder 6,
**dadurch gekennzeichnet, dass** das mindestens eine integrierte Steuerventil (1) in einem Einfederungsbereich zwischen etwa +3mm und etwa -3mm absperrt.

9. Luftfederanordnung nach Anspruch 1 oder 6,
**dadurch gekennzeichnet, dass** eine Belüftung der Druckkammer (5) durch das mindestens eine integrierte Steuerventil (1) eine Einfederung von weniger als etwa -3mm erfordert, wobei mit zunehmender Einfederung bis etwa -15mm ein Belüftungsquerschnitt zunimmt.

## Claims

1. Air spring assembly, comprising at least one integrated control valve (1) for applying compressed air to a pressure chamber (5) formed between an outer tube (2), a pedestal tube (3) and an air bellows (4) connecting them, wherein the at least one integrated control valve (1) can be activated with several switching positions via integrated mechanical actuating means as a function of an air spring stroke for level adjustment, wherein furthermore the pressure chamber (5) comprises a compression spring (8) with end faces located between a tube upper part (6) of the outer tube (2) and a tube lower part (7) of the outer tube (2), **characterised in that** a lever (9) mechanically connected to the at least one integrated control valve (1) can be actuated via at least one actuating lug (10) located at an end face of the tube lower part (7) in order to implement a stepped characteristic of a ventilation and/or venting of the pressure chamber (5), the at least one actuating lug (10) partially entering the pedestal tube (3) for actuating the lever (9).

2. Air spring assembly according to claim 1,
**characterised in that** the at least one actuating lug (10) is joined to the end face of the tube lower part (7) in a non-positive manner or by adhesive force.

3. Air spring assembly according to claim 1,
**characterised in that** the tube lower part (7) and the at least one actuating lug (10) located thereon are designed as a single piece.

4. Air spring assembly according to claim 1,
**characterised in that** the lever (9) has a horseshoe shape and is mounted with both distal ends on a valve housing (11) of the at least one integrated control valve (1).

5. Air spring assembly according to claim 1,
**characterised in that** the lever (9) has a bar shape and is mounted with one distal end on the valve housing (11) of the at least one integrated control valve (1).

6. Air spring assembly according to claim 1,
**characterised in that** the at least one integrated control valve (1) is designed as a 3/3-way valve and ventilates, vents and blocks the pressure chamber (5).

7. Air spring assembly according to claim 1 or 6,
**characterised in that** the at least one actuating lug (10) has no contact with the lever (9) between a full top-out position and a partial top-out position of at least approximately +15 mm and the at least one integrated control valve (1) vents the pressure chamber (5), a venting cross-section decreasing with increasing deflection from approximately +15 mm to approximately -3 mm.

8. Air spring assembly according to claim 1 or 6,
**characterised in that** the at least one integrated control valve (1) blocks in a deflection range between approximately +3 mm and approximately -3 mm.

9. Air spring assembly according to claim 1 or 6,
**characterised in that** a ventilation of the pressure chamber (5) by the at least one integrated control valve (1) requires a deflection of less than approximately -3 mm, a ventilation cross-section increasing with increasing deflection to approximately -3 mm.

## Revendications

1. Agencement de ressort pneumatique, comprenant au moins une soupape (1) de commande intégrée pour l'alimentation en air comprimé d'une chambre (5) de pression formée d'un soufflet (4) à ressort pneumatique entre un tube (2) extérieur, un tube (3) de roulement et les reliant, la au moins une soupape (1) de commande intégrée pouvant être commandée pour le réglage du niveau en fonction d'une course du ressort pneumatique par plusieurs positions de commutation par l'intermédiaire d'un moyen d'actionnement mécanique intégré, la chambre (5) de pression comprenant, en outre, un ressort (8) de compression s'appliquant du côté frontal entre une partie (6) supérieure du tube (2) extérieur et une partie (7) inférieure du tube (2) extérieur,
**caractérisé en ce qu'**un levier (9) relié mécaniquement à la au moins une soupape (1) de commande intégrée peut être actionné par au moins un bec (10) d'actionnement disposé sur une surface frontale de la partie (7) inférieure du tube pour réaliser une caractéristique à échelon d'une alimentation en air et/ou d'une purge d'air de la chambre (5) de pression, le au moins un bec (10) d'actionnement pénétrant pour l'actionnement du levier (9) en partie dans le tube (3) de déroulement.

2. Agencement de ressort pneumatique suivant la revendication 1, **caractérisé en ce que** le au moins un bec (10) d'actionnement est relié à la surface frontale de la partie (7) inférieure du tube par une liaison à coopération de force ou à coopération de matière.

3. Agencement de ressort pneumatique suivant la revendication 1, **caractérisé en ce que** la partie (7) inférieure de tube et le au moins un bec (10) d'actionnement, qui y est disposé, sont constitués d'une seule pièce.

4. Agencement de ressort pneumatique suivant la revendication 1, **caractérisé en ce que** le levier (9) a la forme d'un fer à cheval et est monté, par ses deux extrémités distales, sur un corps (11) de la au moins une soupape (1) de commande intégrée.

5. Agencement de ressort pneumatique suivant la revendication 1, **caractérisé en ce que** le levier (9) a la forme d'une barre et est monté, par l'une des ses extrémités distales, sur le corps (11) de la au moins une soupape (1) de commande intégrée.

6. Agencement de ressort pneumatique suivant la revendication 1, **caractérisé en ce que** la au moins une soupape (1) intégrée est constituée sous la forme d'une soupape 3/3 voies et alimente en air, purge et ferme la chambre (5) de pression.

7. Agencement de ressort pneumatique suivant la revendication 1 ou 6,
**caractérisé en ce que** le au moins un bec (10) d'actionnement n'a, entre une position d'extension complète et une position d'extension partielle d'au moins environ +15 mm, pas de contact avec le levier (9) et **en ce que** la au moins une soupape (1) de commande intégrée purge la chambre de pression, une section transversale de purge diminuant au fur et à mesure qu'augmente la compression d'environ +15 mm à environ +3 mm.

8. Agencement de ressort pneumatique suivant la revendication 1 ou 6,
**caractérisé en ce que** la au moins une soupape (1) de commande intégrée ferme dans une plage de compression comprise entre environ +3 mm et environ -3 mm.

9. Agencement de ressort pneumatique suivant la revendication 1 ou 6,
**caractérisé en ce qu'**une alimentation en air de la chambre (5) de pression par la au moins une soupape (1) de commande intégrée exige une compression d'environ -3 mm, une section transversale d'alimentation en air augmentant au fur et à mesure qu'augmente la compression jusqu'à environ -15 mm.
